Europäisches Patentamt

European Patent Office

Office européen des brevets

(19)

(11)     EP 1 363 007 A2

(12)     **EUROPEAN PATENT APPLICATION**

(43) Date of publication:
**19.11.2003 Bulletin 2003/47**

(51) Int Cl.7: **F02D 41/22**, F02D 13/02,
F01L 1/34

(21) Application number: **03011227.0**

(22) Date of filing: **16.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.05.2002 JP 2002143391**

(71) Applicant: **Nissan Motor Co., Ltd.**
**Yokohama-shi, Kanagawa (JP)**

(72) Inventors:
 • **Kawamura, Katsuhiko**
   **Yokohama-shi, Kanagawa (JP)**
 • **Nakahara, Yoichiro**
   **Inagi-shi, Tokyo (JP)**
 • **Kuroki, Makoto**
   **Yokohamas-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(54)     **Failure diagnosis apparatus and method for diagnosing position control system**

(57)     In a failure diagnosis apparatus of a position control system (variable valve operating system) wherein a target position of a control object (camshaft) changes and an actual position of the control object is feedback-controlled to the target position. A failure of the position control system is detected based upon a difference ($\Sigma C = \Sigma A - \Sigma B$) or a ratio ($\Sigma B / \Sigma A$) between an integral value $\Sigma A$ of the target position and an integral value $\Sigma B$ of the actual position thereof.

# FIG.2

## Description

## Field of the Invention

The present invention relates to a failure diagnosis apparatus and a method for diagnosing a position control system that feedback-controls an actual position of a control object to a target position thereof.

## Background of the Invention

With respect to a diagnosis of an earlier position control system such as a variable valve operating apparatus in an internal combustion engine where rotation phase of a carnshaft continuously varies to control valve timing of an intake valve and an exhaust valve in the engine, as shown in a Japanese Unexamined Patent Publication No. 11 - 2141, when a predetermined time has elapsed after a target value (position) of the rotation phase has varied stepwise, a failure of the variable valve operating apparatus is diagnosed based upon deviations between a target value of the rotation phase and an actual value thereof.

## Summary of the Invention

However, a diagnosis of the earlier position control system disclosed in the Japanese Unexamined Patent Publication No. 11 - 2141 is not accurately performed, because in case where the target value (position) of the rotation phase has varied within a predetermined time, a varying state of the target position during the predetermined time is not detected each time and used for its diagnosis.

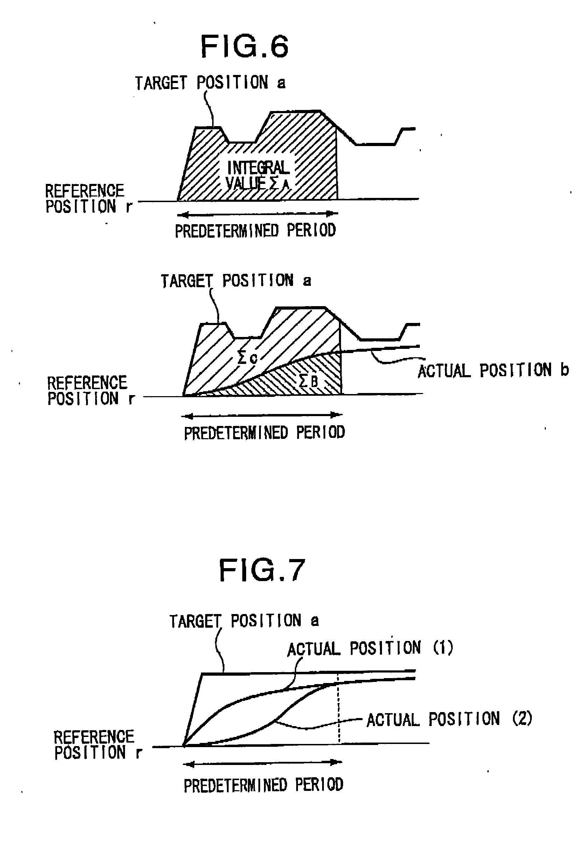

And also, in this diagnosis, there is no difference in the diagnosis result between the following events only if a deviation between a target position and an actual position in one event (1) is the same as in the other event (2)(Fig. 7).

(1) an actual position of the rotation phase comes close to the target position thereof quickly, but thereafter, the convergence to the target position slows down.
(2) an actual position of the rotation phase does not come close to the target position in the beginning period quickly and in the ending period, the actual position thereof converges to the target position quickly.

Namely, as an integral deviation for a predetermined period between an actual position and a target position in the variable valve operating apparatus becomes larger, an exhaust gas emission performance deteriorates further. Accordingly, this problem arises in the other event (2) and is left unsolved therein.

Moreover, other earlier failure diagnosis apparatuses are as follows. A Japanese Unexamined Patent Publication No.6 - 101452 discloses that in a diagnosis device of a HC absorbent in an internal combustion engine, a failure thereof is diagnosed based upon an integral value of an absorption heat amount of HC. However, this failure diagnosis device does not check and use variations in a target value for the diagnosis and therefore, can not be applied to a system such as a continuous-variable control for a rotation phase of a camshaft where a target position thereof varies one after another. A Japanese Unexamined Patent publication No. 8 — 338286 and a Japanese Unexamined patent Publication No. 9— 137717 disclose that a failure of an exhaust system or a secondary air supply system in an internal combustion engine is diagnosed based upon an integral value of an output voltage of an oxygen sensor. However, this diagnosis device has also a constant target voltage and therefore, can not be applied to a system such as a continuous-variable control for a rotation phase of a camshaft where a target position thereof varies one after another.

The present invention provides an accurate-failure diagnosis apparatus for a position control system that feedback-controls an actual position of a control object to a varying target position thereof.

Therefore, one aspect of the present invention provides a failure diagnosis apparatus for a position control system where a failure thereof is diagnosed based upon a relation between an integral value of a target position of a control object and an integral value of an actual position thereof.

Other aspects and features of this invention will become understood from the following description with accompanying drawings.

## Brief Explanation of the drawings

Fig. 1 (A) is a system view of a variable valve operating apparatus showing an embodiment according to the invention.

Fig. 1 (B) is a partial view of the variable valve operating apparatus showing the embodiment according to the invention. Fig. 2 is a flowchart of position control.

Fig. 3 is a flowchart of diagnosis according to a first embodiment.

Fig. 4 is a flowchart of diagnosis according to a second embodiment.

Fig. 5 is a flowchart of diagnosis according to a third embodiment.

Fig. 6 is an explanation view of an integral value.

Fig. 7 is a view showing an example of an actual position' convergence to a target position.

Fig. 8 is an explanation view of calculation period of the integral value.

Fig. 9 is a flowchart in use of a model position as the target position.

Fig. 10 is an explanation view of the model position.

## Detailed Description of the Preferred Embodiments

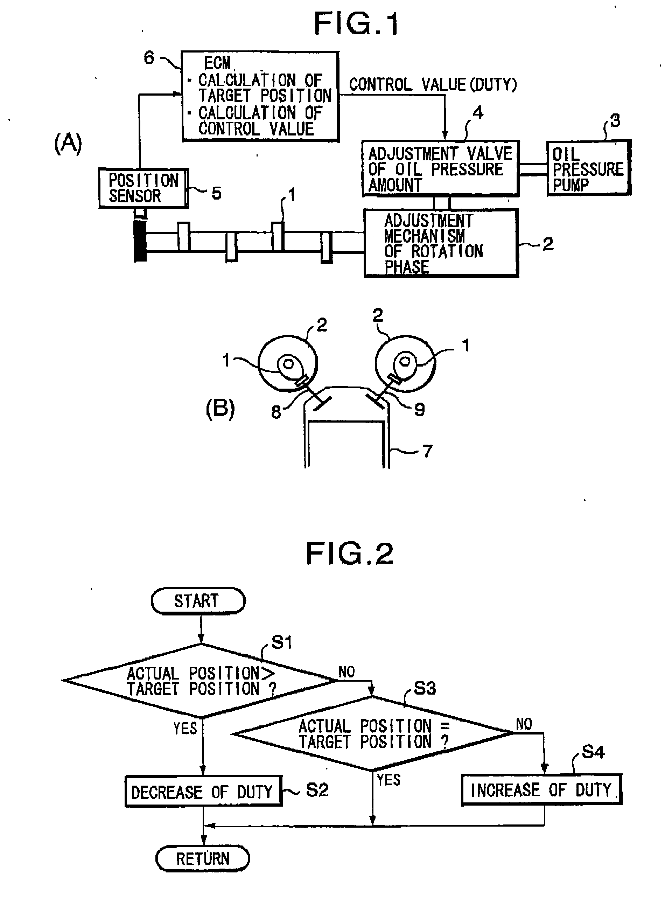

The embodiments according to the invention will be explained with reference to the drawings. Fig. 1 is a system structure of a variable valve operating apparatus as a position control system. A rotation phase adjustment mechanism 2 that varies a rotation phase of a camshaft (control object)1 is disposed at one end of camshaft 1 in an internal combustion engine 7. Camshaft 1 is operatively connected to engine 7 and opens and closes an intake valve 8 and an exhaust valve 9 corresponding to an engine rotation. Rotation phase adjustment mechanism 2 adjusts the rotation phase of camshaft 1 by controlling pressure from an oil pressure pump 3 by an oil pressure amount adjusting valve 4.

A position sensor 5 that detects an actual position (an actual rotation position; actual angle) of camshaft 1 is disposed at the other end of camshaft 1 and a signal of position sensor 5 Is input to an engine control module (ECM) 6. ECM 6 calculates a target position (a target rotation phase; target angle) based upon an engine operating condition in an internal combustion engine and on the other hand, calculates a control value (DUTY) of oil pressure amount adjusting valve 4 so that the actual position becomes the target position and feedback-controls the rotation phase to the target position due to the control value outputted to rotation phase adjustment mechanism 2.

As shown in a flowchart of Fig. 2, at S 1, it is judged whether or not the actual position is beyond the target position. When the actual position is beyond the target position, the process goes to S 2 wherein the DUTY is decreased. When the actual position is not beyond the target position, the process goes to S 3 wherein it is judged whether or not the actual position is equal to the target position. When the actual position is equal to the target position, the current DUTY is held and when the actual position is not equal to the target position (the actual position has not advanced to the target position), the process goes to S 4 wherein the DUTY is increased.

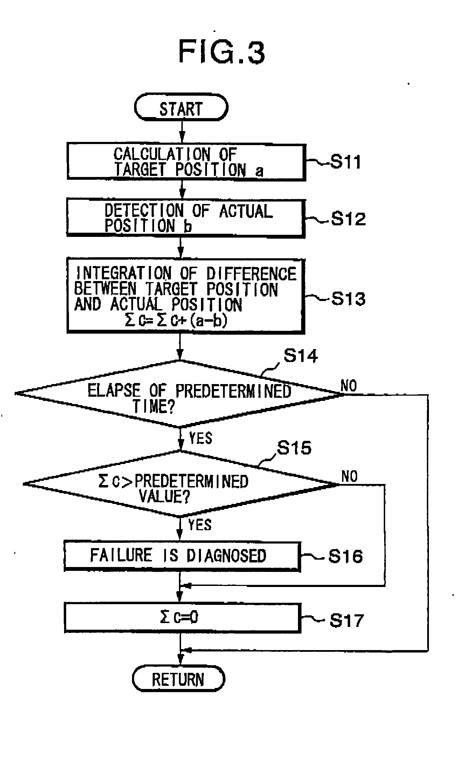

A diagnosis apparatus for such position control system (variable valve operating apparatus) will be explained. A diagnosis thereof is carried out in ECM 6 according to a flowchart in Fig. 3, 4, or 5. Accordingly, ECM 6 is included in a position control system and also in a diagnosis apparatus thereof (a failure detector).

Fig. 3 is a flowchart of a diagnosis according to a first embodiment. At S 11, a target position (target angle) a is calculated. At S 12, an actual position (actual angle) b is detected. At S 13, a difference component of the target position and the actual position (a - b) is integrated and an integral value is determined according to the following equation.

$$\Sigma C = \Sigma C + (a - b)$$

At S 14, it is judged whether or not a predetermined time elapses after the integration starts. When the predetermined time does not elapse, the process ends and when the predetermined time elapses, it is judged that it is time for diagnosis and the process goes to S 15. At S 15 it is judged whether or not an integral value $\Sigma$ C (Fig. 6) of a difference component between the target position and the actual position goes beyond a predetermined value (a threshold value predetermined for failure diagnosis). When the integral value goes beyond the predetermined value, the process goes to S 16 wherein a failure is diagnosed. This step corresponds to a failure detector.

Accordingly, in reference to Fig. 7, even when the deviation between the target position at the predetermined elapse time and the actual position is the same in the two events of the actual position (1) and the actual position (2), no failure is diagnosed in the event (1) where the integral value of the deviations is small and a failure is diagnosed in the event (2) where the integral value of the deviations is large.

At S 17, the integral value $\Sigma C$ is cleared and the process ends.

According to the embodiment, in reference to Fig. 6, a failure is detected based upon a difference ($\Sigma C = \Sigma A — \Sigma B$) between the integral value ($\Sigma A$) of the target position and the integral value ($\Sigma$ B) of the actual value, namely, the integral value ($\Sigma$ C) of the difference component (a — b) between the target position and the actual position. Thereby, even if the target position varies, the entire deviations therebetween are detected properly and an accurate diagnosis can be carried out.

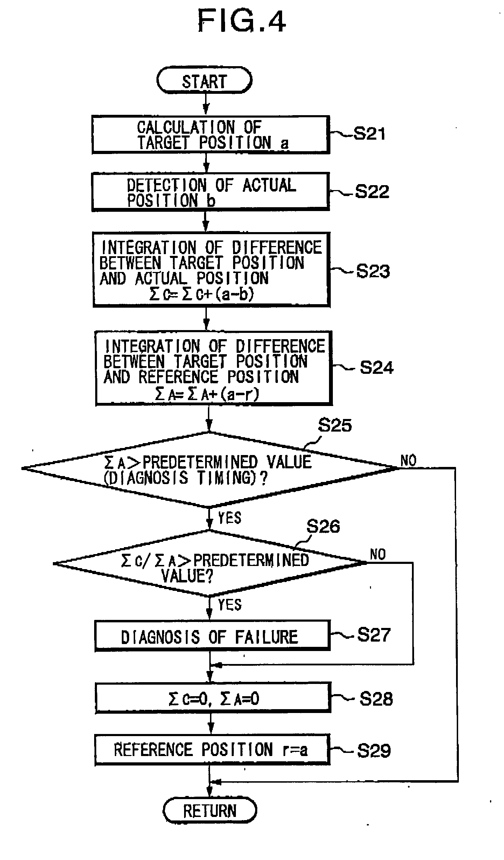

Fig. 4 is a flowchart of a diagnosis according to a second embodiment. At S 21, a target position (target angle) a is calculated. At S 22, an actual position (actual angle) b is detected. At S 23, a difference component of the target position and the actual position (a - b) is integrated and an integral value is determined according to the following equation.

$$\Sigma C = \Sigma C + (a - b)$$

At S 24, a difference component of the target position and a reference position (a - r) is integrated and an integral value is determined according to the following equation. $\Sigma A = \Sigma A + (a - r)$. the reference position may be set as 0 position, but in the embodiment is set as a target position (or actual position) at a point of an integration start.

At S 25, it is judged whether or not an integral value $\Sigma$ A of the target position ( the Integral value of a difference component between the target position and the reference position) goes beyond a predetermined value and when the integral value $\Sigma$ A does not go beyond the predetermined value, the process ends and when the integral value $\Sigma$ A goes beyond the predetermined value, since it is time for diagnosis and the process goes to S 26.

At S 28, it is judged whether or not a ratio Σ C / Σ A of an integral value Σ C (Fig. 6) of a difference component between the target position and the actual position to the integral value Σ A of the target position (the integral value of the difference component between the target position and the reference position) goes beyond a predetermined value (a threshold value predetermined for failure diagnosis). When the ratio goes beyond the predetermined value, the process goes to S 27 wherein a failure is diagnosed. This step corresponds to a failure detector.

At S 28, the integral value Σ C, Σ A is cleared.

At S 29, a current target position a is set as a reference position r (r = a), the process ends.

According to the embodiment, for detecting a failure based upon a difference (Σ C = Σ A — Σ B) between the integral value (Σ A) of the target position and the integral value (Σ B) of the actual value, namely, the integral value (Σ C) of the difference component (a - b) between the target position and the actual position, the integral value of the target position, namely, the ratio Σ C / Σ A of the integral value Σ C of the difference component between the target position and the actual position to the integral value Σ A of the difference component between the target position and the reference position is calculated and a failure is judged based upon the ratio.

As a result, the following effect is obtained. If the failure is carried out based upon the integral value of the difference component between the target position and the actual position within a predetermined time, the deviation occurs in diagnosis between when the target position is set as a large value (large area) and when as a small value, because regardless of a system response performance, when the target position varies by a large margin, the integral value of the difference component between the target position and the actual position becomes large and on the other hand, when the target position varies by a small margin, the integral value thereof becomes small.

Therefore, as described above, the failure diagnosis is carried out based upon Σ C /Σ A calculated. Thereby, the failure diagnosis is accurately carried out when the target position varies either by a large margin or by a small margin.

According to the embodiment, a calculation of the Integral value is not performed for each predetermined time and a failure diagnosis is not carried out fro each predetermined time, but the calculation of the integral value is for a period of from a point of an integration start to when the integral value Σ A of the difference component between the target position and the reference position amounts to a predetermined value (S25). With this varying diagnosis period, the following effect can be obtained.

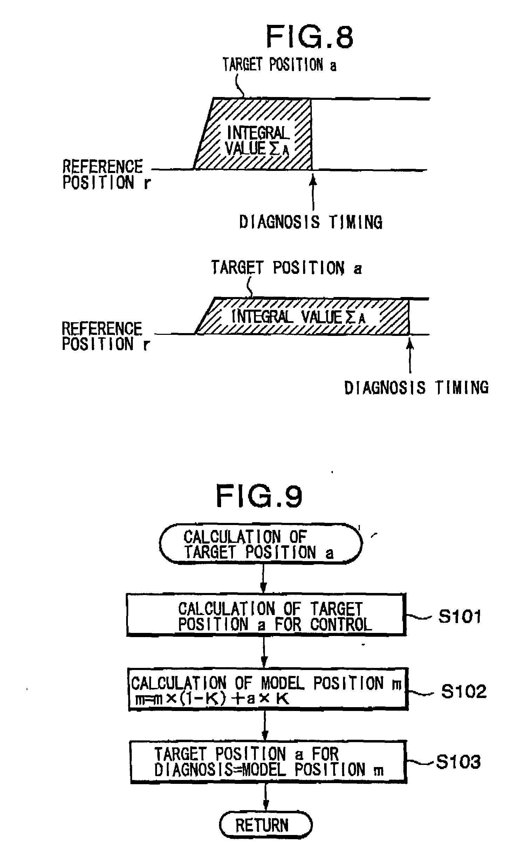

As shown in Fig. 8, in order to accomplish the same diagnosis accuracy between a large change and a small change of the target position, the diagnosis in the large change of the target position takes a short time and the diagnosis in the small change thereof takes a long time. Therefore, as described above, the diagnosis is carried out when an integral value (Σ A) of the difference component between the target position and the reference position reaches a predetermined value and thereby, the diagnosis period is simply determined without use of a complicated process.

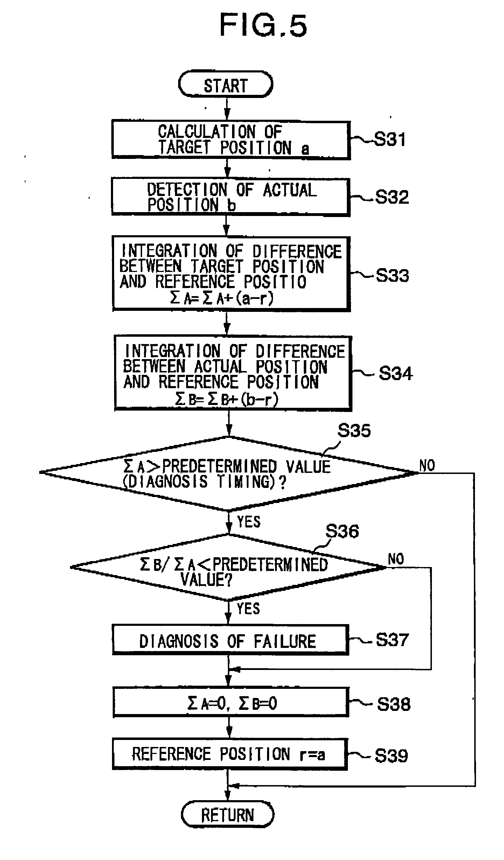

Fig. 5 is a flowchart of a diagnosis according to a third embodiment. At S 31, a target position (target angle) a is calculated. At S 32, an actual position (actual angle) b is detected. At S 33, a difference component of the target position and the actual position (a - r) is integrated and an integral value is determined according to the following equation.

$$\Sigma A = \Sigma A + (a - r).$$

At S 34, a difference component of the target position and a reference position (b - r) is integrated and an integral value is determined according to the following equation.

$$\Sigma B = \Sigma B + (b - r).$$

At S 35, it is judged whether or not an integral value ΣA of the target position ( the integral value of a difference component between the target position and the reference position) goes beyond a predetermined value and when the integral value Σ A does not go beyond the predetermined value, the process ends and when the Integral value Σ A goes beyond the predetermined value, since it Is time for diagnosis and the process goes to S 36.

At S 36, it is judged whether or not a ratio Σ B / Σ A of an integral value Σ B of an actual position (an integral value of a difference component between the actual position and the reference position) to the integral value ΣA of the target position (the integral value of the difference component between the target position and the reference position) is less than a predetermined value (a threshold value predetermined for failure diagnosis). When the ratio is less than the predetermined value, the process goes to S 37 wherein a failure is diagnosed. This step corresponds to a failure detector.

At S 38, the integral value ΣA, ΣB is cleared.

At S 39, a current target position a is set as a reference position r (r = a), the process ends.

According to the embodiment, in reference to Fig. 6, a failure is detected based upon a ratio (Σ B / Σ A) of the integral value (Σ B) of the actual value to the integral value (Σ A) of the target position. Thereby, even if the target position varies, the entire deviations therebetween are detected properly and an accurate diagnosis can be carried out.

According to the embodiment, not an absolute position of the target position or the actual position, but the difference component between the reference position and the target position or the actual position is integrated when the integral value of the target position or the actual position is calculated. Namely, on the basis of how much the target position or the actual position changes within the diagnosis period, more accurate diagnosis can be carried out.

A fourth embodiment will be explained. According to the embodiment, a model position made by carrying out delay-processing a final target position for position control is used as a target position for diagnosis.

Calculation of a target position a at S 11 in a flowchart of Fig. 3, S 21 in a flowchart of Fig. 4 or S 31 in a flowchart of Fig. 5 is performed according to a flowchart of Fig. 9.

At S 101, a final position a for control is calculated. At S 102, a model position m is calculated by carrying out delay-processing the final target position a for control as follows. $m_t = m_{t-1} \times (1 - K) + a_t \times K$ (t: calculation timing. K: weight constant. $0 < K < 1$). At S 103, the following diagnosis process is carried out based upon the model position calculated as the target position a for diagnosis.

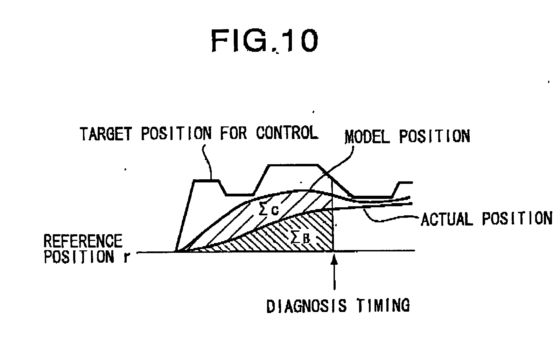

According to the embodiment, the following effect can be obtained by use of the model position made by carrying out the delay-processing the final target position for control as the target position for diagnosis (Fig. 10).

When the target position (target angle) takes 40 degrees and 0 degrees in a quick cycle repeatedly, the actual position can not follow the target position even in a normal system and the integral value of the difference component thereof can be an abnormal value.

On the contrary, a model position that Is followed with a usual response velocity of the normal system is calculated and a difference between the model position and the actual position is used. Thereby, no matter how the model position moves, a normal system can not be diagnosed as a failure by mistake and the accurate diagnosis is carried out.

This application claims priority to Japanese Patent Application No. 2002- 143391 filed May 17, 2002. The entire disclosure of Japanese Patent Application No. 2002 - 143391 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims.

Furthermore, the foregoing description of the embodiments according to the present invention is provided for illustration only, and not for the purpose of limiting the invention as defined by the appended claims and their equivalents. Moreover, features of the different embodiments may be combined.

**Claims**

1. A failure diagnosis apparatus for diagnosing a failure of a position control system (2,3,4,5,6) that feedback-controls an actual position of a control object (1) to a target position thereof, wherein the target position of the control object (1) changes comprising:

    a failure detector (6) that detects a failure of the position control system (2,3,4,5,6) based upon a relation between an integral value of the target position and an integral value of the actual position.

2. A failure diagnosis apparatus according to claim 1, wherein
    the relation Is a difference between the integral value of the target position and the integral value of the actual position.

3. A failure diagnosis apparatus according to claim 1, wherein
    the relation is a ratio of the integral value of the actual position to the integral value of the target position thereof.

4. A failure diagnosis apparatus according to claim 1, wherein
    the relation is a ratio of a difference between the integral value of the target position and the integral value of the actual position to the integral value of the target position.

5. A failure diagnosis apparatus according to any of claim 1- 4, wherein
    the failure detector (6) integrates a difference between the target position and a reference position of the control object (1) to calculate the integral value of the target position and a difference between the actual position and the reference position to calculate the integral value of the actual position.

6. A failure diagnosis apparatus according to any of claim 1 - 5, wherein
    the failure detector (6) calculates the integral value of the target position and the actual position to a point where an integral value of a difference between the target position and a reference position of the control object (1) reaches a predetermined value.

7. A failure diagnosis apparatus according to any of claim 1 - 6, wherein
    the failure detector (6) uses, as the target position for the diagnosis, a model position determined by delay-processing a final target position.

**8.** A failure diagnosis apparatus according to any of claim 1 - 7, wherein

the position control system (2,3,4,5,6) is a variable valve operating system for an internal combustion engine (7) comprising:

an intake valve (8) or an exhaust valve (9) disposed in a cylinder for the internal combustion engine (7);
a camshaft (1) operatively connected to the engine (7) to operate the intake valve (8) or the exhaust valve (9); and
a valve adjustment mechanism (2) that varies valve timing of the intake valve (8) or the exhaust valve (9) by varying rotation phase of the camshaft (1).

**9.** A method for diagnosing a failure of a position control system (2,3,4,5,6) that controls a position of a control object (1) comprising:

feedback-controlling an actual position of the control object (1) to a target position thereof, wherein the target position of the control object (1) changes; and
detecting a failure of the position control system (2,3,4,5,6) based upon a difference between an integral value of the target position and an integral value of the actual position.

**10.** A method for diagnosing a failure of a position control system (2,3,4,5,6) that controls a position of a control object (1) comprising:

feedback-controlling an actual position of the control object (1) to a target position thereof, wherein the target position of the control object (1) changes; and
detecting a failure of the position control system (2,3,4,5,6) based upon a ratio of an integral value of the actual position of the control object (1) to an Integral value of the target position thereof.

# FIG.1

(A)

ECM
· CALCULATION OF TARGET POSITION
· CALCULATION OF CONTROL VALUE

6

CONTROL VALUE (DUTY)

ADJUSTMENT VALVE OF OIL PRESSURE AMOUNT

4

OIL PRESSURE PUMP

3

POSITION SENSOR

5

1

ADJUSTMENT MECHANISM OF ROTATION PHASE

2

(B)

2    2

1    1

8    9

7

# FIG.2

START

ACTUAL POSITION > TARGET POSITION ?    S1

NO

ACTUAL POSITION = TARGET POSITION ?    S3

NO

YES

DECREASE OF DUTY    S2

YES

INCREASE OF DUTY    S4

RETURN

# FIG.3

```
        ( START )
            │
            ▼
┌───────────────────────┐
│   CALCULATION OF       │── S11
│   TARGET POSITION a    │
└───────────────────────┘
            │
            ▼
┌───────────────────────┐
│  DETECTION OF ACTUAL   │── S12
│  POSITION b            │
└───────────────────────┘
            │
            ▼
┌───────────────────────┐
│ INTEGRATION OF DIFFERENCE│
│ BETWEEN TARGET POSITION │── S13
│ AND ACTUAL POSITION     │
│   ΣC=ΣC+(a-b)           │
└───────────────────────┘
            │
            ▼
        ╱◇╲  S14
   ╱ELAPSE OF PREDETERMINED╲  NO
   ╲      TIME?          ╱──────────┐
        ╲◇╱                        │
         │ YES                     │
         ▼                         │
        ╱◇╲  S15                   │
   ╱ΣC>PREDETERMINED╲  NO          │
   ╲    VALUE?     ╱──────────┐    │
        ╲◇╱                   │    │
         │ YES                │    │
         ▼                    │    │
┌───────────────────────┐     │    │
│  FAILURE IS DIAGNOSED  │─S16 │    │
└───────────────────────┘     │    │
         │◄───────────────────┘    │
         ▼                         │
┌───────────────────────┐          │
│       ΣC=0            │── S17     │
└───────────────────────┘          │
         │◄────────────────────────┘
         ▼
     ( RETURN )
```

$\Sigma C = \Sigma C + (a-b)$

$\Sigma C > $ PREDETERMINED VALUE?

$\Sigma C = 0$

# FIG.4

START

CALCULATION OF
TARGET POSITION a —— S21

DETECTION OF ACTUAL
POSITION b —— S22

INTEGRATION OF DIFFERENCE
BETWEEN TARGET POSITION
AND ACTUAL POSITION
$\Sigma c = \Sigma c + (a - b)$ —— S23

INTEGRATION OF DIFFERENCE
BETWEEN TARGET POSITION
AND REFERENCE POSITION
$\Sigma A = \Sigma A + (a - r)$ —— S24

S25
$\Sigma A >$ PREDETERMINED VALUE
(DIAGNOSIS TIMING)? — NO

YES

S26
$\Sigma c / \Sigma A >$ PREDETERMINED
VALUE? — NO

YES

DIAGNOSIS OF FAILURE —— S27

$\Sigma c = 0, \ \Sigma A = 0$ —— S28

REFERENCE POSITION $r = a$ —— S29

RETURN

# FIG.5

START

CALCULATION OF
TARGET POSITION a ~S31

DETECTION OF ACTUAL
POSITION b ~S32

INTEGRATION OF DIFFERENCE
BETWEEN TARGET POSITION
AND REFERENCE POSITIO
$\Sigma A = \Sigma A + (a-r)$ ~S33

INTEGRATION OF DIFFERENCE
BETWEEN ACTUAL POSITION
AND REFERENCE POSITION
$\Sigma B = \Sigma B + (b-r)$ ~S34

S35

$\Sigma A >$ PREDETERMINED VALUE
(DIAGNOSIS TIMING)? — NO

YES

S36

$\Sigma B / \Sigma A <$ PREDETERMINED
VALUE? — NO

YES

DIAGNOSIS OF FAILURE ~S37

$\Sigma A = 0, \Sigma B = 0$ ~S38

REFERENCE POSITION r=a ~S39

RETURN

# FIG.6

TARGET POSITION a

INTEGRAL VALUE ΣA

REFERENCE
POSITION r

PREDETERMINED PERIOD

TARGET POSITION a

Σc

ΣB

ACTUAL POSITION b

REFERENCE
POSITION r

PREDETERMINED PERIOD

# FIG.7

TARGET POSITION a

ACTUAL POSITION (1)

ACTUAL POSITION (2)

REFERENCE
POSITION r

PREDETERMINED PERIOD

# FIG.8

TARGET POSITION a

INTEGRAL VALUE $\Sigma_A$

REFERENCE POSITION r

DIAGNOSIS TIMING

TARGET POSITION a

INTEGRAL VALUE $\Sigma_A$

REFERENCE POSITION r

DIAGNOSIS TIMING

# FIG.9

CALCULATION OF TARGET POSITION a

CALCULATION OF TARGET POSITION a FOR CONTROL — S101

CALCULATION OF MODEL POSITION m
$m = m \times (1-K) + a \times K$ — S102

TARGET POSITION a FOR DIAGNOSIS=MODEL POSITION m — S103

RETURN

# FIG.10

TARGET POSITION FOR CONTROL    MODEL POSITION

$\Sigma_C$

ACTUAL POSITION

$\Sigma_B$

REFERENCE
POSITION r

DIAGNOSIS TIMING